(19) Europäisches Patentamt
European Patent Office
Office européen des brevets

(11) Veröffentlichungsnummer: **0 042 561**
**B1**

# (12) EUROPÄISCHE PATENTSCHRIFT

(45) Veröffentlichungstag der Patentschrift: **27.03.85**

(51) Int. Cl.⁴: **C 08 L 67/02**, C 08 K 5/42

(21) Anmeldenummer: **81104565.7**

(22) Anmeldetag: **13.06.81**

## (54) Flammwidrige Formmassen auf Basis thermoplastischer aromatischer Polyester, Verfahren zu ihrer Herstellung und ihre Verwendung zur Herstellung von Formkörpern.

(30) Priorität: **25.06.80 DE 3023818**
**19.09.80 DE 3035357**

(43) Veröffentlichungstag der Anmeldung:
**30.12.81 Patentblatt 81/52**

(45) Bekanntmachung des Hinweises auf die Patenterteilung:
**27.03.85 Patentblatt 85/13**

(84) Benannte Vertragsstaaten:
**DE FR GB IT**

(56) Entgegenhaltungen:
**DE - A - 2 555 258**
**DE - A - 2 703 710**
**DE - A - 2 948 871**
**FR - A - 2 281 403**
**US - A - 3 651 174**

**Die Akte enthält technische Angaben, die nach dem Eingang der Anmeldung eingereicht wurden und die nicht in dieser Patentschrift enthalten sind.**

(73) Patentinhaber: **BAYER AG, Konzernverwaltung RP Patentabteilung, D-5090 Leverkusen 1 Bayerwerk (DE)**

(72) Erfinder: **Freitag, Dieter, Dr., Hasenheide 10, D-4150 Krefeld (DE)**
Erfinder: **Nouvertné, Werner, Dr., Scheiblerstrasse 95, D-4150 Krefeld (DE)**
Erfinder: **Reinking, Klaus, Dr., Robert-Stolz-Strasse 16b, D-5632 Wermelskirchen (DE)**
Erfinder: **Tacke, Peter, Dr., Brandenburger Strasse 12, D-4150 Krefeld (DE)**
Erfinder: **Kleiner, Frank, Dr., Gerstenkamp 4, D-5000 Köln 80 (DE)**
Erfinder: **Schmidt, Manfred, Dr., c/o Mobay Chemical Corp. 1020 North-Third-Street, New Martinsville / W.V. 26 155 (US)**

EP 0 042 561 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Die Erfindung betrifft flammwidrige Formmassen, die thermoplastische Polyester auf Basis von Diphenolen und Iso- und/oder Terephthalsäuren, und als Flammschutzmittel Ammonium- bzw. Alkalisalze und gegebenenfalls Tetrahalogenphthalimide und gegebenenfalls Polytetrafluorethylen enthalten, ein Verfahren zur Herstellung dieser Formmassen und ihre Verwendung zur Herstellung von Formkörpern.

Aromatische Polyester sind bekannt (W. M. Eareckson, J. Polym. Sci. XL, 399–406 (1959); André Conix, »Thermoplastic Polyesters from Bisphenols«, Ind. Eng. Chem., Vol. 51, No. 2, 147–150, Febr. 1959; FR-A 1 177 517, US-A 3 351 624, DE-AS 1 445 384). Sie werden aufgrund ihrer ausgezeichneten Eigenschaften überall dort eingesetzt, wo hohe Wärmeformbeständigkeit und Zähigkeit erwünscht sind.

Wegen ihres hohen Gehaltes an aromatischen Bausteinen besitzen Formteile aus aromatischen Polyestern ein günstiges Brandverhalten: Sie sind schwierig zu entflammen und brennen, einmal entzündet, nur langsam weiter oder verlöschen von selbst. Für viele Anwendungen reicht dieses Brandverhalten jedoch nicht aus.

Erwünscht ist ein Brandverhalten VO gemäß der Prüfnorm von Underwriters' Laboratories, Subj. 94, nachfolgend mit UL-94 bezeichnet. Nach dieser Prüfnorm dürfen Prüfkörper (Stäbe der Abmessungen 127 × 12 × 3,2 bzw. 1,6 mm) nach der Entflammung nicht abtropfen und eine maximale durchschnittliche Nachbrennzeit von 5 sec besitzen.

Die bislang eingesetzten Flammschutzmittel sind entweder Anlaß zu verminderter Farbstabilität der Schmelze oder vermindern die Zähigkeit oder die Witterungsstabilität der Polykondensate wesentlich.

Die DE-A 2 703 710 betrifft Polycarbonate mit einem Gehalt an halogeniertem Phthalimid, an Alkalisalz einer anorganischen oder organischen Säure (z. B. von Perfluor-$C_1$—$C_8$-alkansulfonsäure) und gegebenenfalls an Perfluorethylen.

Die FR-A 2 281 403 betrifft Polycarbonate bzw. Polyestercarbonate, die durch den Zusatz eines fluorierten Polyolefins und eines Alkali- oder Erdalkalisalzes flammwidrig eingestellt sind. Die bevorzugten Salze werden auf Seite 5, Zeilen 20–38 aufgezählt; ein Ammonium- oder Alkalisalz einer Perfluor-$C_1$—$C_6$-alkansulfonsäure enthält diese Aufzählung nicht. Der Schwerpunkt liegt bei den Salzen aromatischer Sulfonsäuren.

Überraschenderweise wurde nun gefunden, daß Ammonium- bzw. Alkalisalze von Perfluoralkansulfonsäuren mit 1 bis 6 C-Atomen und gegebenenfalls halogenierte Phthalimide und gegebenenfalls Polytetrafluorethylen bei aromatischen Polyestern die gleiche flammhemmende Wirkung zeigt wie die etwa sechsfache Gewichtsmenge Decabromdiphenylether, ohne daß gleichzeitig die oben beschriebenen Nachteile auftreten.

Besonders bevorzugte erfindungsgemäße Formmassen enthalten

a) 99.6 bis 99.9 Gewichtsteile thermoplastischer aromatischer Polyester auf Basis von Diphenolen, Iso- und/oder Terephthalsäure oder deren halogenierten bzw. $C_1$—$C_4$-alkylierten Derivaten und
b) 0.1 bis 0.4 Gewichtsteile mindestens eines Ammonium- bzw. Alkalisalzes einer Perfluoralkansulfonsäure mit 1 bis 6 C-Atomen.

Ein weiterer Gegenstand der Erfindung ist ein Verfahren zur Herstellung dieser Formmassen, wonach man die Komponenten a), b) und gegebenenfalls c), d) und weitere Hilfsmittel — vorzugsweise in der Schmelze — miteinander vereinigt.

Weiterer Gegenstand der Erfindung ist die Verwendung dieser Formmassen zur Herstellung von Formkörpern.

Die aromatischen Polyester a) können neben den Resten von Diphenolen und Iso- bzw. Terephthalsäuren auch Reste von Monophenolen, aromatischen Monocarbonsäuren und Verzweigungsmitteln enthalten.

Sie besitzen in der Regel relative Lösungsviskositäten von 1,18 bis 2,0, vorzugsweise von 1,2–1,5 (gemessen an einer Lösung von 0.5 g Polyester in 100 ml Dichlormethan-Lösung bei 25°C).

Bevorzugte Diphenole für die Herstellung der Polyester a) sind Verbindungen der Formel

$$HO{-}A{-}OH \qquad (III)$$

worin A einen zweiwertigen ein- oder mehrkernigen aromatischen Rest mit 6–30 C-Atomen bedeutet, wobei A derart gebaut ist, daß die beiden OH-Gruppen direkt an je ein C-Atom eines aromatischen Systems gebunden sind.

Besonders bevorzugte Diphenole sind Verbindungen der Formel

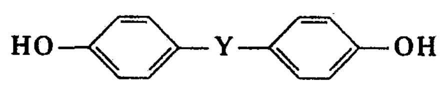

(IV)

in der

Y eine Einfachbindung, einen Alkylen- oder Alkylidenrest mit 1—7 C-Atomen, einen Cycloalkylen- oder Cycloalkylidenrest mit 5—12 C-Atomen,

$$-O- \quad -S- \quad -\underset{\underset{C}{\|}}{S}- \quad -SO_2- \quad \text{oder} \quad -\underset{\underset{O}{\|}}{C}-$$

bedeutet, sowie deren kernalkylierte und kernhalogenierte Derivate, z. B.

Hydrochinon,
Resorcin,
Dihydroxidiphenyle,
Bis-(hydroxiphenyl)-alkane,
Bis-(hydroxiphenyl)-cycloalkane,
Bis-(hydroxiphenyl)-sulfide,
Bis-(hydroxiphenyl)-ether,
Bis-(hydroxiphenyl)-ketone,
Bis-(hydroxiphenyl)-sulfoxide,
Bis-(hydroxiphenyl)-sulfone und
$\alpha,\alpha'$-Bis-(hydroxiphenyl)-diisopropylbenzole

sowie deren kernalkylierte und kernhalogenierte Verbindungen. Diese und weitere geeignete Diphenole sind z. B. in den US-Patentschriften 3 028 365, 3 275 601, 3 148 172, 3 062 781, 2 991 273, 3 271 367, 2 999 835, 2 970 131 und 2 999 846, in den deutschen Offenlegungsschriften 1 570 703, 2 063 050, 2 063 052, 2 211 956, 2 211 957, der franz. Patentschrift 1 561 518 und in der Monographie »H. Schnell, Chemistry and Physics of Polycarbonates, Interscience Publishers, New York, 1964« beschrieben.

Die wichtigsten Diphenole seien nachfolgend namentlich aufgezählt:

Bisphenol A = 2,2-Bis-(4,4-dihydroxi-diphenyl)-propan, Tetramethylbisphenol A,
1,1-Bis-(4-hydroxiphenyl)-isobutan, 1,1-Bis-(4-hydroxiphenyl)-cyclohexan,
4,4'-Dihydroxidiphenylsulfid, 4,4'-Dihydroxidiphenyl, 4,4'-Dihydroxidiphenylsulfon

sowie deren di- und tetrahalogenierten Derivate. Besonders bevorzugt ist Bisphenol A. Es können auch beliebige Mischungen der vorgenannten Diphenole verwendet werden.

Als Kettenabbrecher für die aromatischen Polyester a) können beispielsweise Phenol, Alkylphenole mit $C_1$—$C_{12}$-Alkylgruppen, halogenierte Phenole, Hydroxidiphenyl, Naphthole, Chlorkohlensäureester aus solchen phenolischen Verbindungen und Chloride von aromatischen Monocarbonsäuren, die durch $C_1$—$C_{12}$-Alkylgruppen und Halogenatome substituiert sein können, verwendet werden.

Als Verzweigungsmittel für die aromatischen Polyester a) können beispielsweise 3- oder mehrfunktionelle Carbonsäurechloride, wie

Trimesinsäuretrichlorid,
Cyanursäuretrichlorid,
3,3',4,4'-Benzophenon-tetracarbonsäuretetrachlorid,
1,4,5,8-Naphthalintetracarbonsäuretetrachlorid oder
Pyromellithsäuretetrachlorid,

in Mengen von 0,01 bis 1,0 Mol-% (bezogen auf eingesetzte Dicarbonsäurederivate) oder 3- oder mehrfunktionelle Phenole, wie

Phloroglucin,
4,6-Dimethyl-2,4,6-tri-(4-hydroxiphenyl)-hepten-2,
4,6-Dimethyl-2,4,6-tri-(4-hydroxiphenyl)-heptan,
1,3,5-Tri-(4-hydroxiphenyl)-benzol,
1,1,1-Tri-(4-hydroxiphenyl)-ethan,
Tri-(4-hydroxiphenyl)-phenylmethan,
2,2-Bis-[4,4-bis-(4-hydroxiphenyl)-cyclohexyl]-propan,
2,4-Bis-(4-hydroxiphenyl-isopropyl)-phenol,
Tetra-(4-[4-hydroxiphenyl-isopropyl]-phenoxi)-methan,
1,4-Bis-[(4,4"-dihydroxitriphenyl)-methyl]-benzol

in Mengen von 0,01 bis 1,0 Mol-% (bezogen auf eingesetzte Diphenole) verwendet werden.

Die aromatischen Polyester können nach dem Umesterungsverfahren (V. V. Korshak und S. V. Vinogradova in »Polyesters«, Pergamon Press [1965], 449) oder durch Chlorwasserstoffabspaltung aus den Säurechloriden und den phenolischen Ausgangskomponenten in der Schmelze, in Lösung oder im Phasengrenzflächenverfahren (DE-OS 2 714 544; V. V. Korshak und S. V. Vinogradova in »Polyesters«, Pergamon Press [1965], 469) hergestellt werden.

Phenolische Verzweigungsmittel können mit den Diphenolen vorgelegt, Säurechlorid-Verzweigungsmittel können zusammen mit den Säurechloriden eingetragen werden.

Besonders bevorzugte Salze b) sind die Ammonium-, Natrium- oder Kaliumsalze von Perfluor-$C_1$—$C_6$-alkansulfonsäure, insbesondere von Perfluorbutansulfonsäure und von Perfluormethansulfonsäure.

Bevorzugte halogenierte Phthalimide c) der Formel I sind beispielsweise:

Tetrachlorphthalimid,
N-Methyl-tetrachlorphthalimid,
Tetrabromphthalimid,
N-Ethyl-tetrachlorphthalimid,
N-Methyl-tetrabromphthalimid,
N-Propyl-tetrachlorphthalimid,
N-Ethyl-tetrabromphthalimid,
N-Isopropyl-tetrachlorphthalimid,
N-Isobutyl-tetrachlorphthalimid,
N-Butyl-tetrabromphthalimid,
N-Phenyl-tetrachlorphthalimid,
N-Isobutyl-tetrabromphthalimid,
N-(4-Chlorphenyl)-tetrachlorphthalimid,
N-Phenyl-tetrabromphthalimid,
N-(3,5-Dichlorphenyl)-tetrachlorphthalimid,
N-(4-Chlorphenyl)-tetrabromphthalimid,
N-2,4,6-Trichlorphenyl)-tetrachlorphthalimid,
N-(3,5-Dichlorphenyl)-tetrabromphthalimid,
N-Naphthyl-tetrachlorphthalimid,
N-(2,4,6-Trichlorphenyl)-tetrabromphthalimid,
N-Naphthyl-tetrabromphthalimid.

Bevorzugte halogenierte Phthalimide c) der Formel II sind beispielsweise:

N,N'-Ethylen-di-tetrachlorphthalimid,
N,N'-Propylen-di-tetrachlorphthalimid,
N,N'-Butylen-di-tetrachlorphthalimid,
N,N'-p-Phenylen-di-tetrachlorphthalimid,
4,4'-Di-tetrachlorphthalimido-diphenyl,
N-(Tetrachlorphthalimido)-tetrachlorphthalimid,
N,N'-Ethylen-di-tetrabromphthalimid,
N,N'-Propylen-di-tetrabromphthalimid,
N,N'-Butylen-di-tetrabromphthalimid,
N,N'-p-Phenylen-di-tetrabromphthalimid,
N,N'-Di-tetrabromphthalimido-diphenyl und
N-(Tetrabromphthalimido)-tetrabromphthalimid.

Besonders bevorzugte halogenierte Phthalimide c) sind

Tetrachlorphthalimid,
N-Methyl-, sowie N-Phenyl-tetrachlorphthalimid,
N,N'-Ethylen-di-tetrachlorphthalimid und
N-(Tetrachlorphthalimido)-tetrachlorphthalimid.

Mischungen verschiedener halogenierter Phthalimide c) der Formeln (I) oder (II) können gleichfalls verwendet werden.

Die Polytetrafluorethylene d) haben in der Regel mittlere Molekulargewichte $\overline{M}w$ zwischen $10^5$ und $10^6$. Sie stellen farblose Feststoffe dar, die nach bekannten Verfahren hergestellt werden können, so beispielsweise durch Polymerisation von Tetrafluorethylen in wäßrigem Medium mit einem freie Radikale bildenden Katalysator, beispielweise Natrium-, Kalium- oder Ammoniumperoxidsulfat bei Drucken von 7—71 bar und bei Temperaturen von 0 bis 200°C, vorzugsweise bei Temperaturen von 20 bis 100°C; vgl. beispielsweise US-A 2 393 967.

Die erfindungsgemäßen Formmassen können neben den Flammschutzmitteln noch Stabilisatoren, Fließ- und Entformungsmittel, Weichmacher sowie Füllstoffe, wie z. B. Glasfasern, Glaskugeln, Asbest-oder Kohlenstoffasern, Kieselgur, Kaolin, Gesteinsmehl und Pigmente enthalten.

Die Flammschutzmittelkombinationen werden den aromatischen Polyestern vorzugsweise in der Schmelze, beispielsweise in einem Extruder, ggf. gemeinsam mit Hilfs-, Füll- und Verstärkungsstoffen, zugesetzt.

Die erfindungsgemäßen Formmassen können nach üblichen Verfahren in Spritzgießmaschinen zu Formkörpern oder in Extrudern zu Halbzeug verarbeitet werden.

Die in den nachfolgenden Beispielen angegebenen Prozente beziehen sich, soweit nicht anders angegeben, auf das Gewicht.

## Beispiele

### A. Herstellung der Polyester

#### Polyester 1

Herstellung eines aromatischen Polyesters aus Bisphenol A und äquimolaren Mengen Iso- und Terephthalsäurechlorid

In 7,52 kg 45%iger Natronlauge und 160 l Wasser wurden 9,12 kg Bisphenol A, 24 g Natriumborhydrid sowie 150,4 g Phenol (4 Mol-%, bezogen auf Bisphenol A) unter Stickstoffatmosphäre gelöst. In diese Lösung wurden 148,4 g (1 Mol-%) Triphenylethylphosphoniumbromid eingetragen und anschließend 60 kg Dichlormethan sowie 48 kg Chlorbenzol zugegeben.

In das intensiv gerührte Zweiphasengemisch wurde unter Wasserkühlung innerhalb 15 Minuten bei einer Innentemperatur von 20—25°C und bei einem pH-Wert von 12—13 eine Lösung aus je 4141,2 g Iso- und Terephthalsäuredichlorid in 12 l Dichlormethan eingetragen.

Nach beendeter Zugabe wurde 15 Minuten nachgerührt, anschließend die alkalisch-wäßrige Phase abgetrennt, die organische Phase zunächst mit verdünnter Phosphorsäure, dann mit Wasser gewaschen, bis das Waschwasser eine Leitfähigkeit von $1-10^{-5}$ S/cm besaß und die Hauptmenge des Dichlormethans unter Normaldruck abdestilliert (Sumpftemperatur bis ca. 100°C).

Die verbliebene, noch heiße Lösung des aromatischen Polyesters 1 in Chlorbenzol wurde bei 320°C in einem Vakuum-Doppelwellenextruder (Schneckendurchmesser 32 mm) bei ca. 0,014 bar bis auf einen Restgehalt von ca. 50 ppm vom Chlorbenzol befreit, der aromatische Polyester 1 als Strang abgezogen und granuliert.

#### Polyester 2

Herstellung eines aromatischen Polyesters aus Bisphenol A und Iso- und Terephthalsäure im Molverhältnis 3 : 2

In 7,52 kg 45%iger Natronlauge und 160 l Wasser wurden 9,12 kg Bisphenol A und 24 g Natriumborhydrid unter Stickstoffatmosphäre gelöst. In diese Lösung wurden 91 g Triethyl-benzyl-ammoniumchlorid eingetragen und anschließend 60 kg Dichlormethan sowie 48 kg Chlorbenzol zugegeben.

In das intensiv gerührte Zweiphasengemisch wurde unter Wasserkühlung innerhalb 15 Minuten bei einer Innentemperatur von 20—25°C und bei einem pH-Wert von 12—13 eine Lösung aus 4968 g Isophthalsäuredichlorid, 3312 g Terephthalsäuredichlorid und 333 g p-Isooctylphenol in 12 l Dichlormethan eingetragen. Die weitere Verarbeitung erfolgte wie für Polyester 1 beschrieben.

#### Vergleichsversuche 1—7

In die Polyester 1—2 wurden in einem Doppelwellenextruder (Schneckendurchmesser 32 mm) bei ca. 300°C die Flammschutzmittelkombinationen eingearbeitet, aus den erhaltenen Mischungen Prüfstäbe der Abmessungen 127 ×12,7 × 1,6 mm (1/16 Zoll) und 127 × 12,7 × 3,2 mm (1/8 Zoll) nach dem Spritzgießverfahren hergestellt.

Mit jeweils 10 Prüfstäben wurde das Brandverhalten gemäß UL, Subj. 94, geprüft. Je nach Nachbrenndauer und Abtropfneigung der Prüfkörper erfolgte eine Zuordnung der Materialien zu den nachfolgenden 3 Brennbarkeitsklassen (Beflammungszeit jeweils 10 sec):

Brennbarkeitsklasse

UL 94 V-0 Die einzelnen Prüfkörper brennen höchstens 10 sec, der ganze Satz von 10 Stäben zusammen höchstens 50 sec nach. Falls schmelzflüssiges Material vom brennenden Stab abtropft, entzündet es nicht die Wattelage.

UL 94 V-1 Die einzelnen Prüfkörper brennen höchstens 30 sec, der ganze Satz von 10 Stäben zusammen höchstens 250 sec nach. Sonst wie bei 94 V-0.

UL 94 V-2 Nachbrennzeiten wie bei 94 V-1, schmelzflüssig abtropfendes Material darf jedoch die Wattelage entzünden.

Die Zusammensetzungen der einzelnen brandgeschützten Materialien und die Ergebnisse der Brandprüfungen sind aus der folgenden Tabelle ersichtlich.

Tabelle

Zusammensetzung und Bewertung der Formmassen; Mengenangaben in Gew.-%, bezogen auf die Summe von a), b), c), d)

| Vergleichsversuch Nr. | Nr. des Polyesters | Alkalisalz Menge; Art | Halogeniertes Phthalimid Menge; Art | Polytetrafluorethylen Menge | Bewertung 1/8 Zoll UL 94 | Bewertung 1/16 Zoll UL 94 | Kerbschlagzähigkeit nach DIN 53 453 kJ/m² |
|---|---|---|---|---|---|---|---|
| 1 | 1; | 0,25; Na-hexafluoroaluminat | – | – | V-2 | V-2 | 21,3 |
| 2 | 1; | – | 0,5; Tetrachlor-N-methylphthalimid | – | V-2 | V-2 | 20,5 |
| 3 | 1; | – | – | 0,1 | V-2 | V-2 | 21,8 |
| 4 | 1; | – | – | – | V-2 | V-2 | 22 |
| 5 | 2; | – | – | – | V-1 | V-2 | 21,6 |
| 6 | 1; | 6; Decabromdiphenylether | – | – | V-0 | V-0 | 15,2 |
| 7 | 1; | 3; Decabromdiphenylether | – | – | V-1 | V-2 | 16,9 |

## Beispiel

In die Polyester 1–2 wurde in einem Doppelwellenextruder (Schneckendurchmesser 32 mm) bei ca. 320°C jeweils 0.2 Gew.-% Kaliumperfluorbutansulfonat eingearbeitet, aus den erhaltenen Mischungen Prüfstäbe der Abmessungen 127 × 12,7 × 1,6 mm (1/16 Zoll) und 127 × 12,7 × 3,2 mm (1/8 Zoll) nach dem Spritzgießverfahren hergestellt.

Mit jeweils 10 Prüfstäben wurde das Brandverhalten gemäß UL, Subj. 94, geprüft.

Sämtliche Harze und beide Stabdicken ergaben das Brandverhalten V-0.

## Patentansprüche

1. Flammwidrige Formmassen enthaltend

a) 99–99.99 Gewichtsteile thermoplastischer aromatischer Polyester auf Basis von Diphenolen, Iso- und/oder Terephthalsäure oder deren halogenierten bzw. $C_1$–$C_4$-alkylierten Derivaten,

b) 0.01 bis 1 Gewichtsteile mindestens eines Ammonium- bzw. Alkalisalzes einer Perfluoralkansulfonsäure mit 1 bis 6 C-Atomen,

c) 0 bis 3 Gewichtsteile mindestens eines halogenierten Phthalimids der Formeln I oder II

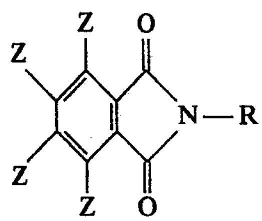

(I)

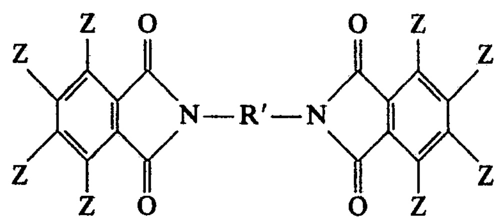

(II)

worin

R ein Wasserstoffatom, einen $C_1$–$C_{10}$-Alkylrest, einen Phenylrest, einen Naphthylrest, $C_6H_4X$, $C_6H_3X_2$, $C_6H_2X_3$,
R' eine Einfachbindung, einen Alkylenrest mit 2–4 C-Atomen, Phenylen, p-Diphenylen,
Z Chlor oder Brom und
X Fluor, Chlor oder Brom bedeuten, und

d) 0 bis 2 Gewichtsteile Polytetrafluorethylen.

2. Formmassen nach Anspruch 1, dadurch gekennzeichnet, daß Komponente a) eine relative Lösungsviskosität von 1.18 bis 2.0 (gemessen an einer Lösung von 0,5 g Polyester in 100 ml Dichlormethan-Lösung bei 25°C) besitzt.

3. Formmassen nach Ansprüchen 1 und 2, dadurch gekennzeichnet, daß sie

99.6–99.9 Gewichtsteile Komponente a) und
0.1– 0.4 Gewichtsteile Komponente b)

enthalten.

4. Formmassen nach Ansprüchen 1 bis 3, dadurch gekennzeichnet, daß Komponente b) ein Ammonium- oder Alkalisalz der Kaliumperfluorbutan- oder -methansulfonsäure ist.

5. Verfahren zur Herstellung der Formmassen nach Ansprüchen 1 bis 4, dadurch gekennzeichnet, daß man die Komponenten a), b) und gegebenenfalls c), d) und weitere Hilfsmittel — vorzugsweise in der Schmelze — miteinander vereinigt.

6. Verwendung der Formmassen nach Ansprüchen 1 bis 4 zur Herstellung von Formkörpern, insbesondere Spritzgußartikeln.

a) 99—99.99 Gewichtsteile thermoplastischer aromatischer Polyester auf Basis von Diphenolen, Iso- und/oder Terephthalsäure oder deren halogenierten bzw. $C_1$—$C_4$-alkylierten Derivaten,

b) 0.01 bis 1 Gewichtsteile mindestens eines Ammonium- bzw. Alkalisalzes einer Perfluoralkansulfonsäure mit 1 bis 6 C-Atomen,

c) 0 bis 3 Gewichtsteile mindestens eines halogenierten Phthalimids der Formeln I oder II

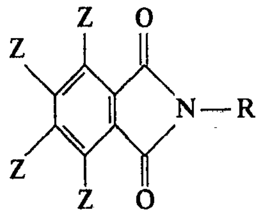

(I)

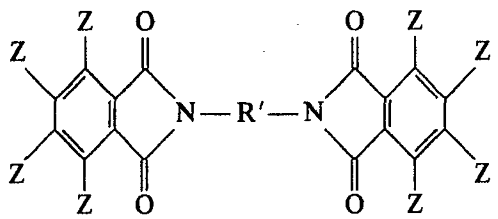

(II)

worin

R ein Wasserstoffatom, einen $C_1$—$C_{10}$-Alkylrest, einen Phenylrest, einen Naphthylrest, $C_6H_4X$, $C_6H_3X_2$, $C_6H_2X_3$,
R' eine Einfachbindung, einen Alkylenrest mit 2—4 C-Atomen, Phenylen, p-Diphenylen,
Z Chlor oder Brom und
X Fluor, Chlor oder Brom bedeuten, und

d) 0 bis 2 Gewichtsteile Polytetrafluorethylen.

**Claims**

1. Flame-resistant moulding compositions containing

a) from 99—99.99 parts by weight of thermoplastic aromatic polyester based on diphenols, iso- and/or terephthalic acid or the halogenated or $C_1$—$C_4$ alkylated derivatives thereof.
b) from 0.01 to 1 part by weight of at least one ammonium or alkali metal salt of a perfluoroalkane sulphonic acid having from 1 to 6 carbon atoms
c) from 0 to 3 parts by weight of at least one halogenated phthalimide corresponding to formulae I or II

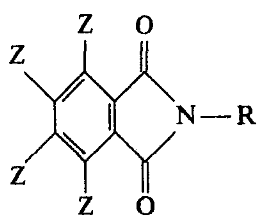

(I)

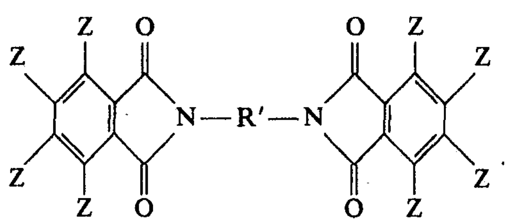

(II)

in which,

R represents a hydrogen atom, a $C_1-C_{10}$ alkyl radical, a phenyl radical, a naphthyl radical, $C_6H_4X$, $C_6H_3X_2$ or $C_6H_2X_3$,
R' represents a direct bond, an alkylene radical having from 2—4 carbon atoms, phenylene or p-diphenylene,
Z represents chlorine or bromine and
X represents fluorine, chlorine or bromine, and

d) from 0 to 2 parts by weight of polytetrafluoroethylene.

2. Moulding compositions according to claim 1, characterised in that component a) has a relative solution viscosity of from 1.18 to 2.0 (measured in a 0.5 g polyester solution in a 100 ml dichloromethane solution at 25°C).

3. Moulding compositions according to claims 1 and 2 characterised in that they contain from

99.6 to 99.9 parts by weight of component a) and from
0.1 to 0.4 parts by weight of component b).

4. Moulding compositions according to claims 1 to 3, characterised in that component b) is an ammonium or alkali metal salt of potassium perfluorobutane or methane sulphonic acid.

5. A process for the production of moulding compositions according to claims 1 to 4, characterised in that components a), b), and optionally c), d) and further auxiliaries are combined, preferably in the melt.

6. The use of the moulding compositions according to claims 1 to 4 for the production of mouldings, more particularly for the production of injection moulded articles.

**Revendications**

1. Matières à mouler ignifuges contenant:

a) 99 à 99,99 parties en poids de polyesters aromatiques thermoplastiques à base de diphénols, d'acide iso- et/ou téréphtalique ou de leurs dérivés halogénés ou alkylés en $C_1-C_4$,
b) 0,01 à 1 partie en poids d'au moins un sel d'ammonium ou alcalin d'un acide perfluoralcane-sulfonique en $C_1-C_6$,
c) 0 à 3 parties en poids d'au moins un phtalimide halogéné de formule I ou II

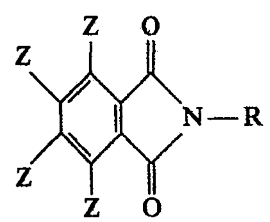

(I)

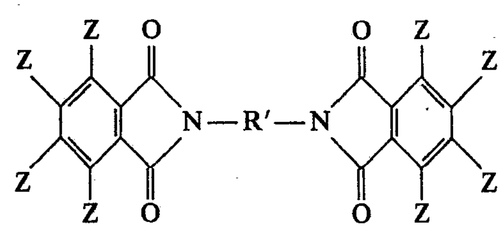

(II)

dans lesquelles

R représente un atome d'hydrogène, un groupe alkyle en $C_1-C_{10}$, un groupe phényle, un groupe naphtyle, $C_6H_4X$, $C_6H_3X_2$, $C_6H_2X_3$,
R' représente une liaison simple, un groupe alkylène en $C_2-C_4$, phénylène, p-diphénylène,
Z représente le chlore ou le brome, et
X représente le fluor, le chlore ou le brome, et

d) 0 à 2 parties en poids de polytétrafluoréthylène.

2. Matières à mouler selon la revendication 1, caractérisées en ce que le composant a) a une viscosité relative en solution de 1,18 à 2,0 (mesurée sur une solution de 0,5 g du polyester dans 100 ml de solution dans le dichlorométhane à 25°C).

3. Matières à mouler selon les revendications 1 et 2, caractérisées en ce qu'elles contiennent:

99,6 à 99,9 parties en poids du composant a), et
0,1 à 0,4 partie en poids du composant b).

4. Matières à mouler selon les revendications 1 à 3, caractérisées en ce que le composant b) est un sel d'ammonium ou alcalin de l'acide perfluorobutane- ou perfluorométhane-sulfonique.

5. Procédé de préparation des matières à mouler selon les revendications 1 à 4, caractérisé en ce que l'on combine les composants a), b), et le cas échéant c), d) et d'autres produits auxiliaires — de préférence à l'état fondu — entre eux.

6. Utilisation des matières à mouler selon les revendications 1 à 4, pour la fabrication d'objets moulés, en particulier d'articles moulés par injection.